# EUROPÄISCHE PATENTSCHRIFT

(11) **EP 1 554 930 B1**
(45) Veröffentlichungstag und Bekanntmachung des Hinweises auf die Patenterteilung: **20.03.2013**
(21) Anmeldenummer: 05000269.0
(22) Anmeldetag: 07.01.2005
(51) Int. Cl.: A01K 39/012

(54) **Futterschale**
Feeding pan
Dispositif d'alimentation

(30) Priorität: 08.01.2004 DE 102004001446
(43) Veröffentlichungstag der Anmeldung: 20.07.2005
(73) Patentinhaber: PAL-Bullermann GmbH, 26169 Markhausen (DE)
(72) Erfinder: Bullermann, Siegbert, 26169 Markhausen (DE)
(74) Vertreter: Eisenführ, Speiser & Partner

(56) Entgegenhaltungen:
- EP-A- 0 327 302
- FR-A- 2 801 766
- US-A- 4 348 988
- US-A- 5 718 187
- US-A- 5 927 232

## Beschreibung

Die Erfindung betrifft eine Futterschale, insbesondere eine Futterschale für Geflügel, z. B. Puten.

Eine Geflügelmast muss sowohl den hygienischen Anforderungen entsprechen als auch wirtschaftlichen Überlegungen genüge. Hierbei ist die Verabreichung des Futters von zentraler Bedeutung. Daher sollte das Futter für eine möglichst geringe Zeit den Bedingungen einer Futtermast ausgesetzt sein, da es ansonsten zu einer Verunreinigung des Futters kommen kann.

Solche Futterschalen für Geflügel sind beispielsweise bekannt aus US-A-4,348,988. EP-A2-0 327 302, FR-A1-2 801 766, US-A-5,927,232 oder US-A-5,718,187.

Aus US 4,348,988 A ist eine Vorrichtung zum Füttern von Geflügel mit einer röhrenförmigen Futterrutsche bekannt, welche eine Förderröhre zum Auswerfen von Geflügelfutter in die Futterrutsche befestigt ist. Aus EP 0 327 302 A ist eine Anordnung zum Füttern von Geflügel zur Verwendung eines automatischen Förderband-Futtersystems bekannt. Eine mehrstufige, inkrementale Verstellung zwischen einer Haube/Futterrutsche durch die Kombination eines Futterbeckens erlaubt dabei die Anpassung auf die Fließelgenschaften verschiedener Futtermittel.

Es ist somit Aufgabe der vorliegenden Erfindung, eine Futterschale vorzusehen, welche sowohl hygienischen Anforderungen als auch wirtschaftlichen Überlegungen genügt.

Die Aufgabe der vorliegenden Erfindung wird durch eine Futterschale gemäß Anspruch 1 sowie durch ein Fütterungssystem gemäß Anspruch 2 gelöst.

Es wird eine Futterschale vorgesehen, welche ein erstes Rohr zum Zuführen von Futter aufweist. An einem Ende des Rohres ist ein erstes Gewinde vorgesehen. Ferner weist die Futterschale eine Dosiereinheit auf, welche an ihrem einen Ende ein zweites Gewinde aufweist. Ein Untertopf dient zum Aufnehmen von Futter. Das erste und zweite Gewinde wirken derart zusammen, dass die Dosiereinheit entlang der Längsachse des ersten Rohres verfahrbar ist und der Füllstand des Futters in dem Übertopf regulierbar ist.

Weitere Ausgestaltungen der Erfindung sind Gegenstand der Unteransprüche.

Figuren 1 bis 13 zeigen Ausführungsbeispiele der Erfindung.
- Fig. 1: zeigt eine Teilschnittansicht einer Futterschale gemäß einem ersten Ausführungsbeispiel,
- Fig. 2: zeigt eine Draufsicht auf eine Futterschale gemäß dem ersten Ausführungsbeispiel,
- Fig.3: zeigt eine Teilschnittansicht einer Abdeckung eines Dosierkonusses,
- Fig. 4: zeigt eine Teilschnittansicht eines Dosierkonusses gemäß dem ersten Ausführungsbeispiel,
- Fig. 5: zeigt eine Seitenansicht der Futterschale gemäß dem ersten Ausführungsbeispiel,
- Fig. 6: zeigt eine Teilschnittansicht der Futterschale gemäß dem ersten Ausführungsbeispiel,
- Fig. 7: zeigt eine weitere Seitenansicht einer Futterschale gemäß dem ersten Ausführungsbeispiel,
- Fig.8: zeigt eine Seitenansicht einer Futterschale gemäß einem zweiten Ausführungsbeispiel,
- Fig. 9: zeigt eine Teilschnittansicht einer Futterschale gemäß dem zweiten Ausführungsbeispiel,
- Fig. 10: zeigt eine Seitenansicht einer Futterschale gemäß einem ersten Ausführungsbeispiel,
- Fig. 11: zeigt eine Seitenansicht einer Futterschale gemäß einem zweiten Ausführungsbeispiel,
- Fig. 12: zeigt eine zentrale Säule der Futterschale gemäß dem zweiten Ausführungsbeispiel, und
- Fig. 13: zeigt eine Teilschnittansicht der zentralen Säule einer Futterschale gemäß einem zweiten Ausführungsbeispiel.

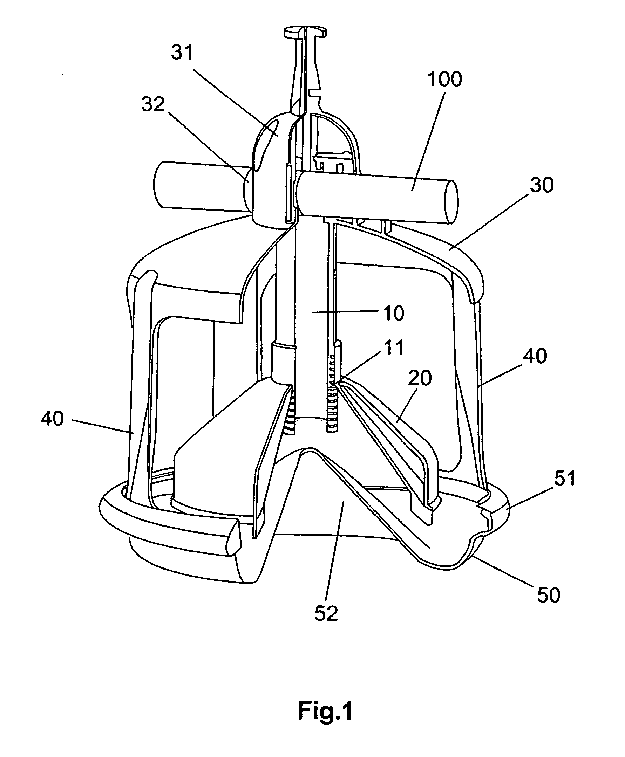

Wie in den Figuren 1 - 13 zu sehen, weist die Futterschale eine zentrale Säule auf, welche an ihrer Unter- und/oder Oberseite außenseitig mit einem Gewinde versehen ist, welches sehr leichtgängig ist. Durch die passgenaue Abstimmung der Gewinde und der zugehörigen Füße wird eine automatische Futterstandshöhe erreicht.

Zur Aufstellung bei Küken wird das Gewinde hochgeschraubt, während des Betriebes, also mit dem Wachsen der Tiere, wird dann eine optimale Futterstandshöhe durch die Selbstassistierung des Dosierkonusses eingehalten.

Bei der selbstregulierenden Futterschale wird mit Hilfe einer Spielpassung am oberen und einer Presspassung am unteren Ende des Gewindes sowie von kleinen Abstandshaltern am unteren Ende des Konusses erreicht, dass sich die Futterschale im Betrieb selbst auf das optimale Futterniveau reguliert.

Zudem sind durch die Kombination von Schalendeckel, Grillstreben und Gewindestücke in einem Stück die Form und die Funktion der Futterschale optimiert.

Fig. 1 zeigt eine Teilschnittansicht einer Futterschale gemäß einem ersten Ausführungsbeispiel. Die Futterschale weist dabei eine zentrale Säule 10 auf, welche an ihrem einen Ende ein Gewinde 11 aufweist. Die Futterschale weist ferner einen Schalendeckel 30, Grillstreben 40 sowie einen Untertopf 50 auf. Am Schalendeckel 30 ist ein oberer Abschnitt 31 vorgesehen, welcher zur Aufnahme eines Zuführrohres 100 ausgestaltet ist. Das Rohr 100 wird durch ein Loch 32 in dem oberen Abschnitt 31 des Deckels eingeführt. Das Rohr 100 weist dabei ebenfalls ein Loch auf, welches mit dem Hohlraum der zentralen Säule korrespondiert. Durch das Loch in dem Rohr 100 kann somit Futter durch den Hohlraum der zentralen Säule 10 in den Futtertopf 50 gelangen. Ein Dosierkonus mit einem entsprechenden Innengewinde 22 ist an dem Außengewinde der zentralen Säule 10 angeordnet bzw. wirkt mit diesem zusammen. Diese beiden Gewinde sind dabei leichtgängig ausgestaltet. Der Dosierkonus 20 weist an seinem unteren Ende einige Abstandshalter 23 auf. Über dem Dosierkonus 20 ist eine Abdeckung 25 angebracht. Die Abdeckung ist in ihrem unteren Bereich im Wesentlichen zylindrisch ausgestaltet.

Der Untertopf 50 weist einen Rand 51 sowie einen im Wesentlichen konvex ausgestalteten Mittelteil 52 auf. Durch die Einstellung des Dosierkonusses 20 wird die Futterhöhe in dem Topf 50 eingestellt. Wenn der Dosierkonus 20 nach oben bewegt wird, vergrößert sich der Abstand zwischen dem unteren Ende des Dosierkonusses 20 der Oberfläche des Untertopfes 50, so dass mehr Futter über das Rohr 100 und die zentrale Säule 10 in den Untertopf 50 gelangen kann. Hierbei ist es jedoch nicht wünschenswert, dass sich zuviel Futter in dem Untertopf 50 befindet, da das Futter den Umgebungsbedingungen in der Geflügelmast ausgesetzt ist und somit die Gefahr der Kontamination vorhanden ist. Um eine mögliche Kontamination des Futters zu reduzieren, ist es wünschenswert, dass lediglich die augenblicklich benötigte Menge an Futter in dem Untertopf 50 vorhanden ist. Durch die Abstandshalter 23 wird der minimale Abstand zwischen dem unteren Ende des Dosierkonusses 20 und dem Untertopf 50 definiert. Die konvexe Ausgestaltung des Mittelteiles 52 des Untertopfes 50 dient ebenfalls dazu, lediglich den tatsächlich benötigten Anteil an Futter dem Untertopf zuzuführen. Mit anderen Worten, es wird hierdurch eine Reduzierung des Futtervolumens erreicht.

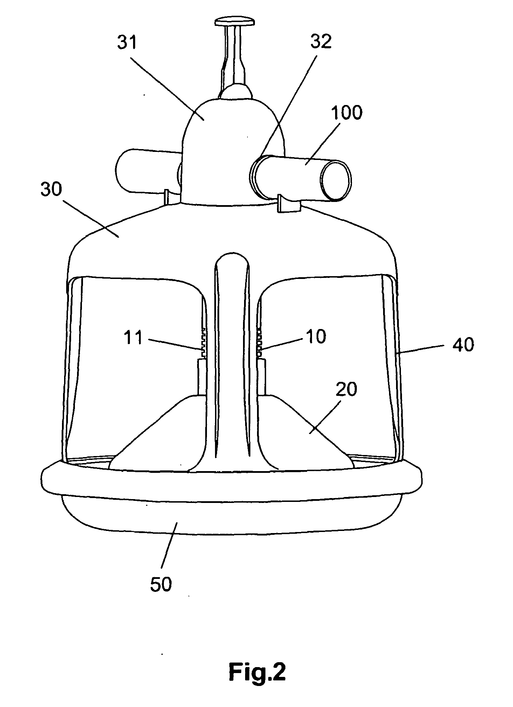

Fig. 2 zeigt eine Seitenansicht der Futterschale von Fig. 1. Die Futterschale ist dabei am oberen Abschnitt 31 des Deckels 30 mit dem Rohr 100 verbunden. Die zentrale Säule 10 mit ihrem Außengewinde 11 ist mit dem Dosierkonus 20 verbunden.

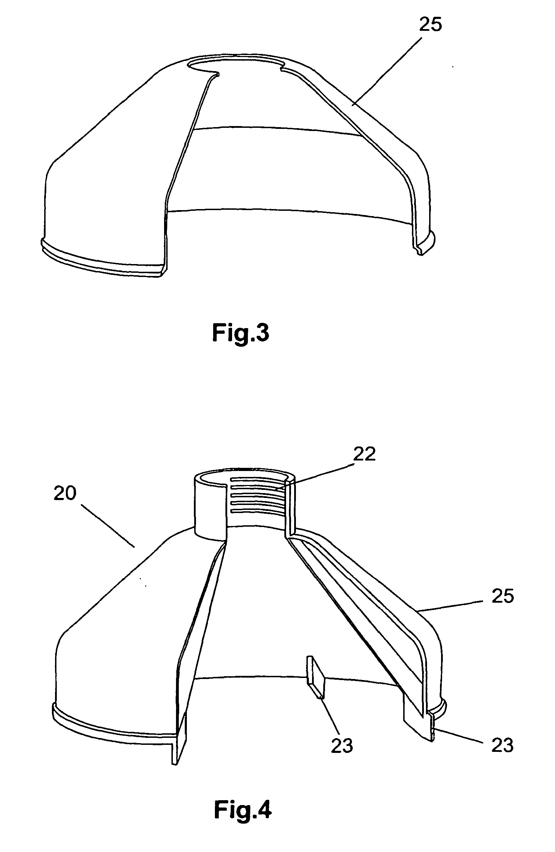

Fig. 3 zeigt eine Teilschnittansicht der Abdeckung 25 des Dosierkonusses 20. Die Abdeckung 25 ist in ihrem unteren Abschnitt im Wesentlichen zylinderförmig ausgestaltet. Somit wird der Raum in der Futterschale (zwischen Deckel und Topf) derart reduziert, dass keine Küken in den Topf 50 fallen können und so das Futter verunreinigen können.

Fig. 4 zeigt eine Teilschnittansicht des Dosierkonusses 20 mit einem Innengewinde 22, einer Abdeckung 25 sowie Abstandshalter 23. Vorzugsweise wird der Dosierkonus einstückig mit der Abdeckung 25 ausgebildet.

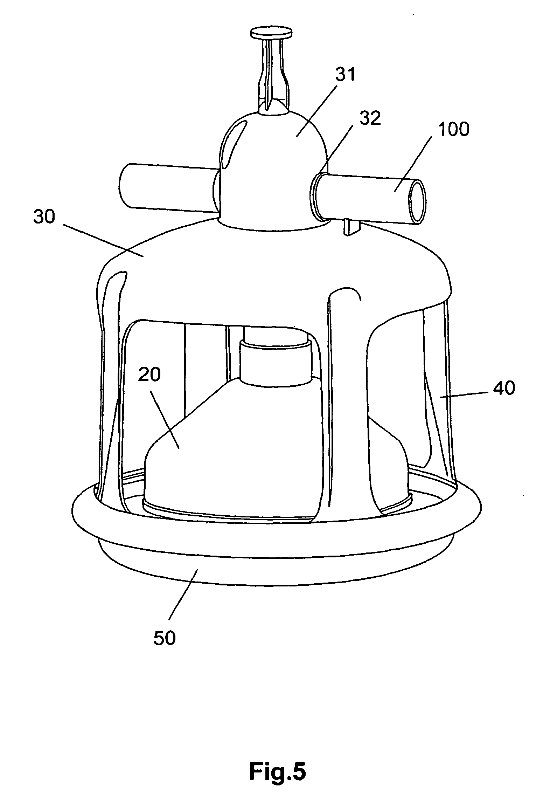

Fig. 5 zeigt eine Seitenansicht einer Futterschale gemäß einem ersten Ausführungsbeispiel. Hier ist im Vergleich zu der Futterschale von Fig. 2 zu sehen, wie der Dosierkonus 20 entlang der zentralen Säule 10 durch Drehen nach oben verfahren worden ist. In einem derartigen Zustand kann mehr Futter in den Untertopf 50 gelangen. Dies ist insbesondere für die Mast von Küken wünschenswert, damit die Küken sich nicht zu sehr in den Untertopf 50 hineinbeugen müssen. Das Hineinbeugen der Küken in den Untertopf ist hinsichtlich einer möglichen Kontamination des Futters unerwünscht. Ferner kann es vorkommen, dass die Küken in den Untertopf hineinklettern, wenn sie das Futter nicht ohne Weiteres erreichen können. Aus hygienischen Gründen ist dies jedoch zu vermeiden. Es wird eine große Futterfläche mit geringem Futtervolumen erwünscht.

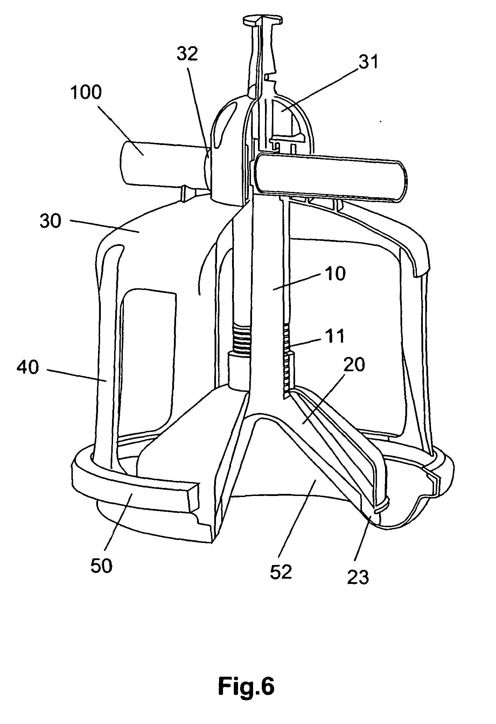

Fig. 6 zeigt eine Teilschnittansicht einer Futterschale gemäß dem ersten Ausführungsbeispiel. In dem in Fig. 6 gezeigten Beispiel befindet sich der Dosierkonus bzw. die Abstandhalter 23 des Dosierkonusses auf dem Untertopf 50, so dass der minimale Abstand zwischen Untertopf und Dosierkonus eingestellt ist.

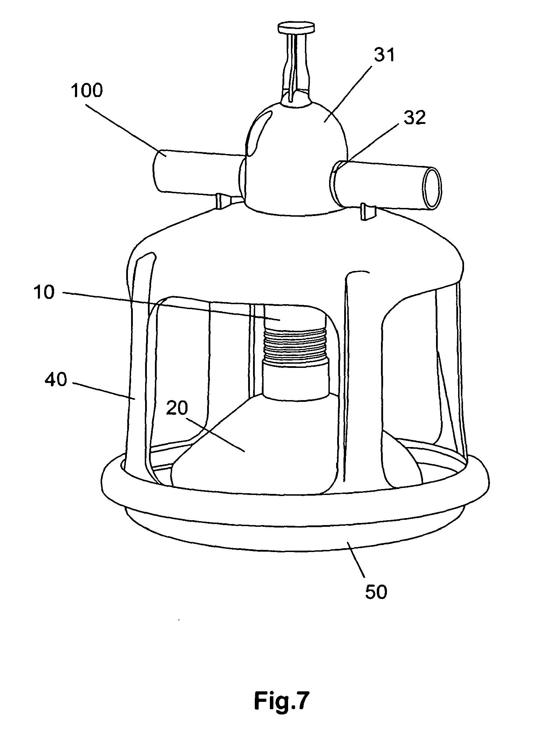

Fig. 7 zeigt eine weitere Seitenansicht der Futterschale des ersten Ausführungsbeispiels.

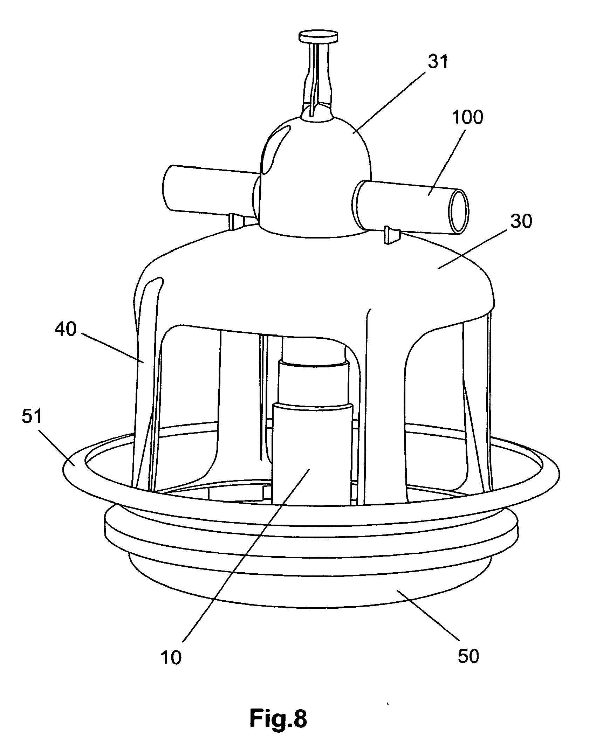

Fig. 8 zeigt eine Seitenansicht einer Futterschale gemäß einem zweiten Ausführungsbeispiel. Hierbei ist die Futterschale im Wesentlichen wie gemäß dem ersten Ausführungsbeispiel ausgebildet und weist einen Schalendeckel 30 mit einem oberen Abschnitt 31 sowie zwei Löchern 32 zum Durchführen des Rohres 100 auf. Der Schalendeckel 30 ist über Grillstreben 40 mit dem Untertopf 50 verbunden. Der Untertopf 50 weist einen Rand 51 auf.

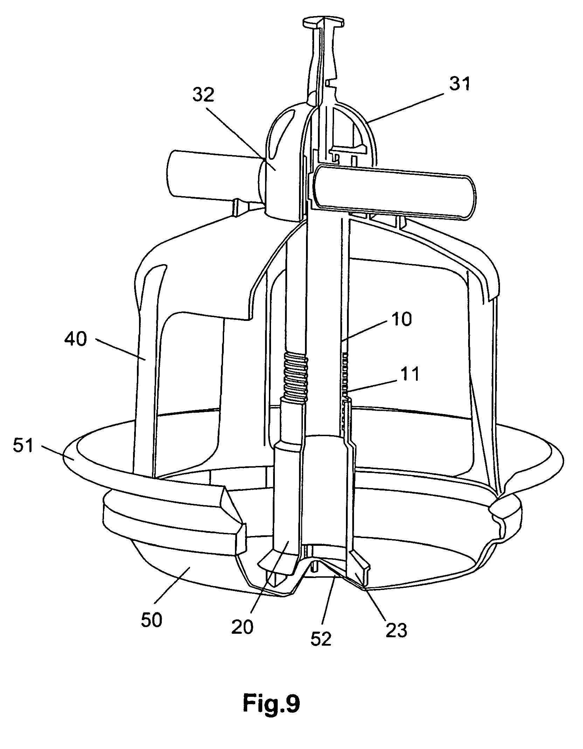

Fig. 9 zeigt eine Teilschnittansicht der Futterschale gemäß dem zweiten Ausführungsbeispiel von Fig. 8. Im Wesentlichen unterscheidet sich die Futterschale gemäß dem zweiten Ausführungsbeispiel von der Futterschale gemäß dem ersten Ausführungsbeispiel durch eine andere zentrale Säule 10 sowie durch einen anderen Untertopf 50. Die Futterschale gemäß dem zweiten Ausführungsbeispiel ist insbesondere für größeres Geflügel geeignet. Dazu weist der Untertopf 50 einen höheren bzw. breiteren Rand 51 auf. Ferner ist der Dosierkonus 20 schmaler ausgestaltet als gemäß dem ersten Ausführungsbeispiel.

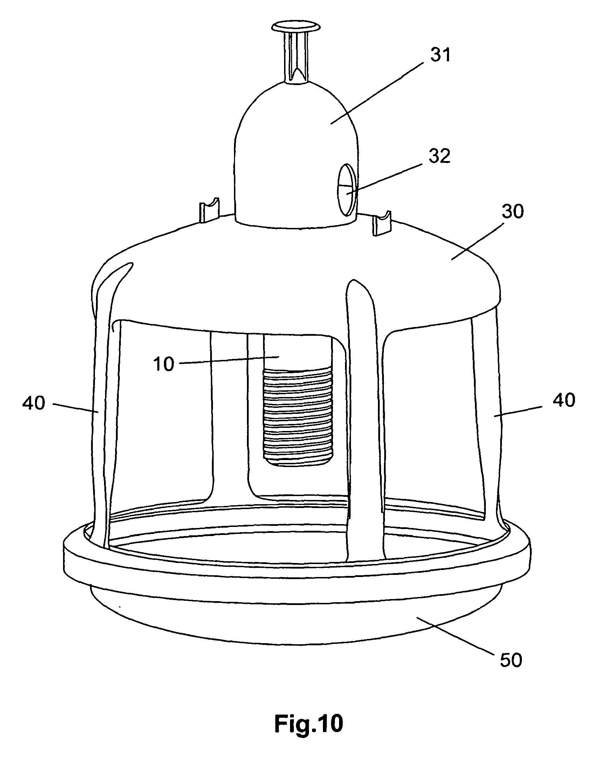

Fig. 10 zeigt eine Seitenansicht des Schalendeckels 30 und des Untertopfes 50 gemäß einem zweiten Ausführungsbeispiel. Hierbei ist der Schalendeckel 30, die Grillstreben 40, die zentrale Säule 10 einstückig ausgestaltet, so dass die Produktionskosten gesenkt werden können.

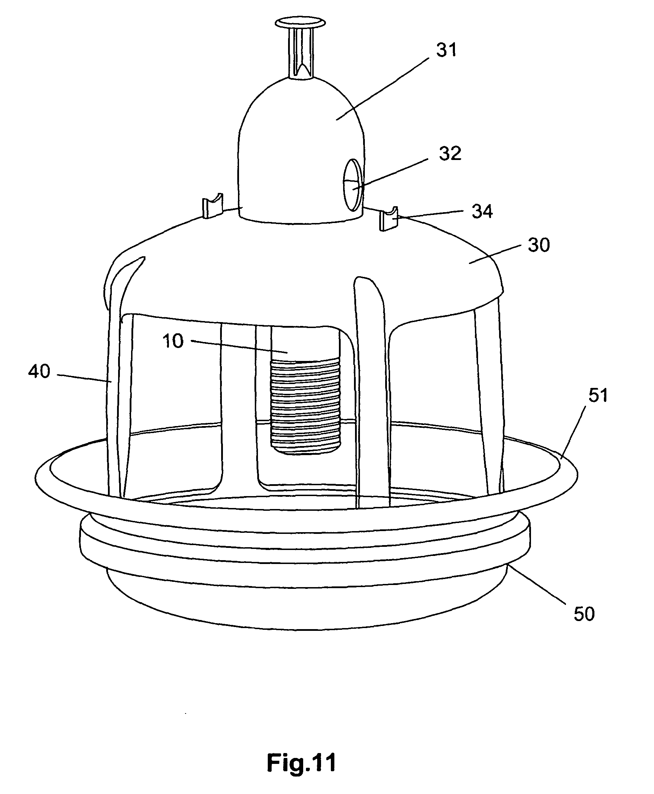

Fig. 11 zeigt eine Seitenansicht eines Schalendeckels 30 mit einem Untertopf 50 gemäß einem zweiten Ausführungsbeispiel.

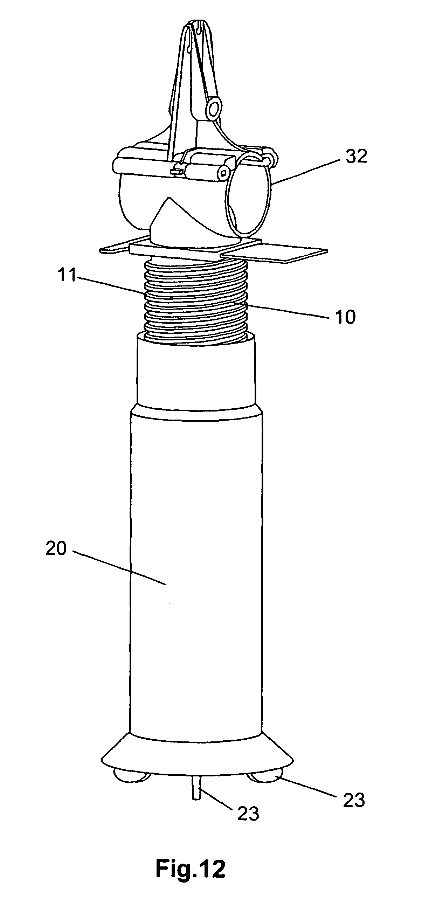

Fig. 12 zeigt eine Seitenansicht der zentralen Säule 10 mit dem Dosierkonus 20 gemäß dem zweiten Ausführungsbeispiel. Hierbei weist die zentrale Säule 10 Außengewinde 11 auf, welche sich im Wesentlichen entlang der gesamten Säule erstrecken. Ferner ist in Fig. 12 ein Dosierkonus 20 und ein Abstandshalter 23 gezeigt.

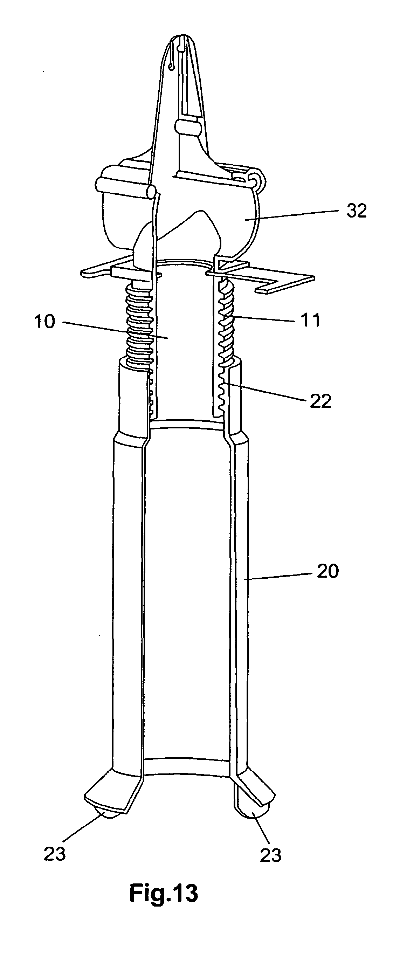

Fig. 13 zeigt eine Teilschnittansicht der zentralen Säule 10 und des Dosierkonusses 20 gemäß Fig. 12.

Das Außengewinde 11 der zentralen Säule 10 und das Innengewinde 22 des Dosierkonusses 20 sind gemäß dem ersten und zweiten Ausführungsbeispiel als ein leichtgängiges Gewinde ausgestaltet. Durch das leichtgängige Gewinde und die Erschütterungen in dem Dosierkonus 20, welche durch die Fütterung der Geflügel auftreten, bewegt sich der Dosierkonus 20 langsam nach unten, bis er durch den Widerstand des sich in dem Untertopf 50 befindlichen Futters gestoppt wird. Das Gewinde ist derart ausgestaltet, dass die Abwärtsbewegung des Konusses 20 vorzugsweise innerhalb von zwei bis drei Wochen erfolgt. Somit wird die Futterhöhe in dem Untertopf 50 automatisch reguliert, da das Futter lediglich bis zur Unterkante des Konusses 20 nachgefüllt werden kann.

Das oben beschriebene Gewinde 11 kann auch als Innengewinde und das Gewinde 22 kann entsprechend als Außengewinde ausgestaltet sein.

## Patentansprüche

1. Selbstregulierende Futterschale, insbesondere für Geflügel, mit
einem ersten Rohr (10) zum Zuführen von Futter, welches an einem Ende ein erstes Gewinde (11) aufweist,
einer als Dosierkonus ausgestalte Dosiereinheit (20), welche an einem ihrer Enden ein zweites Gewinde (22) aufweist, und
einem Untertopf (50) zum Aufnehmen von Futter,
**dadurch gekennzeichnet, dass** das erste und zweite Gewinde (11, 22) sehr leichtgängig ausgestaltet sind, so dass durch das leichtgängige Gewinde und Erschütterungen in dem Dosierkonus (20), welche durch die Fütterung des Geflügel auftreten, der Dosierkonus sich langsam nach unten bewegt, bis er durch den Widerstand des sich in dem Untertopf (50) befindlichen Futters gestoppt wird.

2. System zum kontrollierten Füttern von Geflügel mit einem zweiten Rohr (100) zum Zuführen von Futter und
mindestens einer Futterschale nach Anspruch 1,

## Claims

1. Self-regulating feeding pan, particularly for poultry, having:
a first tube (10) for supplying feed, which has a first thread (11) at one end;
a metering unit (20), configured as a metering cone, which has a second thread (22) at one of its ends; and
a lower bowl (50) for receiving feed,
**characterised in that** the first and second threads (11, 22) are configured in a very free-moving manner so that, because of the free-moving thread and vibrations in the metering cone (20) which occur as a result of the feeding of the poultry, the metering cone moves slowly downwards until it is stopped by the resistance of the feed located in the lower bowl (50).

2. System for the controlled feeding of poultry, having a second tube (100) for supplying feed and at least one feeding pan according to claim 1.

## Revendications

1. Dispositif d'alimentation à régulation automatique, destiné en particulier aux volailles, comprenant :
un premier tube (10) servant à amener les aliments, et présentant à une extrémité un premier filetage (11),
une unité de dosage (20), réalisée sous la forme d'un cône de dosage et présentant à une de ses extrémités un deuxième filetage (22), et
une soucoupe (50) servant à accueillir les aliments,
**caractérisé en ce que** le premier et le deuxième filetages (11, 22) sont configurés de manière à être très libres de sorte que grâce au filetage libre et aux secousses dans le cône de dosage (20) qui apparaissent lorsque les volailles s'alimentent, le cône de dosage se déplace lentement vers le bas jusqu'à ce qu'il soit stoppé par la résistance offerte par les aliments se trouvant dans la soucoupe (50).

2. Système servant à alimenter de manière contrôlée les volailles, comprenant un deuxième tube (100) servant à amener les aliments et
au moins un dispositif d'alimentation selon la revendication 1.
